# EUROPÄISCHE PATENTANMELDUNG

(11) **EP 0 599 324 A1**
(43) Veröffentlichungstag der Anmeldung: **01.06.1994**
(21) Anmeldenummer: 93119037.5
(22) Anmeldetag: 25.11.1993
(51) Int. Cl.: C02F 1/52, B01D 21/01

(54) **Vorrichtung zur Flockung von Feststoffen aus Suspensionen**

(30) Priorität: 27.11.1992 DE 4239871
(71) Anmelder: Huber, Hans-Georg, D-92334 Berching (DE)
(72) Erfinder: Huber, Hans-Georg, D-92334 Berching (DE)
(74) Vertreter: Rehberg, Elmar, Dipl.-Ing.

(57) **Zusammenfassung**

Die Erfindung betrifft eine Vorrichtung zur Flockung von Feststoffen aus Suspensionen, insbesondere aus Schlämmen oder Abwässern unter Verwendung von Flockungshilfsmitteln, mit einem Behälter (1) mit vertikaler Achse (2) und rotationssymmetrischer Wandung (3), der Einlässe für die Suspensionen und das Flockungshilfsmittel und Auslässe für das Filtrat und die pelletierten Flocken (6) aufweist und in dem eine rotationssymmetrische Leitwand (7) zur Ausbildung einer Schlaufenströmung vorgesehen ist, wobei zwischen der Leitwand (7) und der Wandung (3) des Behälters (1) eine Siebwandung (9) vorgesehen ist, die rotationssymmetrisch zur Achse (2) des Behälters (1) angeordnet ist und einen Filtratraum (11) abteilt.

## Beschreibung

Die Erfindung bezieht sich auf eine Vorrichtung zur Flockung von Feststoffen aus Suspensionen, insbesondere aus Schlämmen oder Abwässern, unter Verwendung von Flockungshilfsmitteln, mit einem Behälter mit vertikaler Achse und rotationssymmetrischer Wandung, der Einlässe für die Suspension und das Flockungshilfsmittel und Auslässe für das Filtrat und die pelletierten Flocken aufweist und in dem eine rotationssymmetrische Leitwand zur Ausbildung einer Schlaufenströmung vorgesehen ist. Schlämme und Abwässer werden mit Flockungshilfsmitteln versehen, um dadurch eine Flockenbildung zu erzielen und die pelletierten Flocken einerseits sowie das Filtrat andererseits zu trennen. Der Verbrauch an Flockungshilfsmitteln ist dabei ein wesentliches Kriterium. Er ist auf ein Minimum zu reduzieren, um einerseits die Kosten zu reduzieren und andererseits den Anteil an diesem Zuschlagsstoff so gering wie möglich zu halten, da dieser nicht immer erwünscht ist. Demzufolge ist eine möglichst vollständige Reaktion zwischen Flockungshilfsmittel und Feststoff in der Suspension angestrebt.

Aus der DD-PS 289 754 ist eine Vorrichtung der eingangs beschriebenen Art bekannt, bei der ein Behälter mit rotationssymmetrischer Wandung Anwendung findet, die insgesamt konisch ausgebildet ist und einen Konuswinkel von ca. 30-95° aufweist. Konzentrisch zu der Wandung des Behälters ist eine Leitwand angeordnet, die über den größten Teil ihrer Höhe angepaßt konisch ausgebildet ist und in ihrem unteren Bereich in eine zylindrische Klassierstrecke übergeht. In dem Teil des Reaktionsraumes, der von der konischen Leitwand umschlossen wird, ist ein ebenfalls konisch ausgebildetes Rührwerk ausgebildet, um in der Leitwand eine aufwärtsgerichtete Spiralströmung und im Zwischenraum zwischen Leitwand und Wandung des Behälters eine abwärtsgerichtete Strömung zu erzielen. Damit wird eine Schlaufenströmung im Reaktionsraum um die Leitwand herum erreicht. Die pelletierten Flocken gelangen unter Schwerkrafteinwirkung und im Gegenstrom zu der aufwärtsgerichteten Strömung in dem von der Leitwand umschlossenen Teil des Reaktionsraumes nach abwärts und werden dort über einen Auslaufsstutzen abgezogen. Im oberen Bereich des Behälters ist ein Einlass für Flockungshilfsmittel und für Suspension vorgesehen. Das Filtrat wird über einen an den Reaktionsraum angeschlossenen Auslaufsstutzen abgeleitet. Der Nachteil der bekannten Vorrichtung ist darin zu sehen, daß nicht genügend Reaktionszeit zwischen dem Flockungshilfsmittel und der Suspension zur Verfügung steht, so daß die volle Reaktionsfähigkeit des Flockungshilfsmittels nicht ausgenutzt wird. Durch den Anschluß des Auslaufsstutzens führt das Filtrat unmittelbar benachbart zu dem Einlaß. Für das Flockungshilfsmittel besteht die Gefahr, daß ein beachtlicher Teil des Flockungshilfsmittels mit dem Filtrat abgezogen wird, ohne daß es mit den Feststoffen in der Suspension reagiert hat. Auch wird die Abscheidung der pelletierten Flocken dadurch behindert bzw. erschwert, daß diese entgegen der aufwärtsgerichteten Spiralströmung sich infolge Schwerkrafteinwirkung nach unten bewegen müssen. Sie müssen dabei einen verengten Bereich innerhalb einer Klassierstrecke überwinden, in welchem in nachteiliger Weise vergleichsweise höhere Geschwindigkeiten der strömenden Suspension vorliegen. Da die Reaktion des Flockungshilfsmittels nur innerhalb der Strömung, also während der Bewegung der Suspension, stattfinden kann, ist die Agglomeration der Feststoffe nicht optimal.

Der Erfindung liegt die Aufgabe zugrunde, eine Vorrichtung der eingangs beschriebenen Art bereitzustellen, mit der eine möglichst vollständige Reaktion zwischen dem Flockungshilfsmittel und den Feststoffen in der Suspension erreicht wird.

Erfindungsgemäß wird dies bei der Vorrichtung der eingangs beschriebenen Art dadurch erreicht, daß zwischen der Leitwand und der Wandung des Behälters eine Siebwandung vorgesehen ist, die rotationssymmetrisch zur Achse des Behälters angeordnet ist und einen Filtratraum abteilt.

Die Erfindung geht von dem Gedanken aus, die Reaktion zwischen dem Flockungshilfsmittel und den Feststoffen in der Suspension nicht nur in der bewegten Strömung stattfinden zu lassen, sondern zusätzlich eine ruhende Reaktionsschicht zu schaffen, die der völligen Ausreaktion des Flockungshilfsmittels dient und die Agglomeration der Feststoffe zu pelletierten Flocken begünstigt. Hierzu wird eine Siebwandung vorgeschlagen, die zunächst einmal dazu dient, den Reaktionsraum mit der Schlaufenströmung von einem Filtratraum zu trennen. Die Durchbrechungen in der Siebwandung sind so ausgebildet, daß im wesentlichen nur das Filtrat aus dem Reaktionsraum in den Filtratraum gelangt, während die Feststoffe zurückgehalten werden. An der Innenwandung der Siebwandung bildet sich gleichsam eine Filterschicht aus Feststoffen und noch nicht vollständig ausreagiertem Flockungshilfsmittel, also eine Zwischenlagerstätte für die Flocken. Durch dieses quasiruhende Filterbett tritt das Filtrat unter vergleichsweise langsamer Strömung hindurch, so daß die Feststoffe schonend auf dieser Filterschicht abgelagert werden. Durch die einwirkende Schwerkraft wird sich ein Gleichgewicht zwischen den abgelagerten Flocken und infolge Schwerkraft abbrechenden oder sich lösenden Flocken einstellen, wobei die sich lösenden pelletierten Flocken in Strömungsrichtung an der Innenwandung der Siebwandung und dann weiterhin an der Behälterwandung herabrutschen, während die Schlaufenströmung im Inneren des Teils des Reaktionsraums, der von der Leitwand umschlossen ist, wieder nach oben gefördert wird. An der Innenwandung der Siebwandung wird eine Kontaktstelle für durchtretende Flüssigkeit mit dem Flockungshilfsmittel geschaffen, wobei innerhalb der sich aufbauenden Schicht die Strömungsgeschwindigkeit stark verringert wird, wodurch der Agglomerationsvorgang begünstigt ist.

Die Siebwandung kann insbesondere als Schlitzwandung mit vertikal ausgerichteten Schlitzen vorgesehen sein, um die Schlitzbreite quer zur Haupterstrecksrichtung der Schlitze möglichst gering zu halten. Es ist andererseits aber auch möglich, andere Schlitz- oder Durchbrechungsformen zu wählen, beispielsweise kreisrunde Löcher geringen Durchmessers.

Die Wandung des Behälters kann im unteren Bereich trichterförmig ausgebildet sein, wobei die Siebwandung an den trichterförmigen Wandbereich anschließt. Im oberen Bereich ist die Wandung des Behälters vorzugsweise zylindrisch ausgebildet, und zwar rotationssymmetrisch zu der Achse des Behälters. Es versteht sich, daß die Siebwandung einerseits einen entsprechenden Abstand zur Wandung des Behälters und andererseits einen entsprechenden Abstand zur Leitwand aufweist. Diese Abstände sind so gewählt, daß Verengungen des Querschnitts vermieden werden und die Schlaufenströmung über den gesamten Strömungsweg etwa gleiche Querschnittsflächen durchsetzt. Die Siebwandung schließt im unteren Bereich an die Wandung des Behälters an. Wenn der Behälter als geschlossenes System betrieben wird, ist auch ein Anschluß der Siebwandung im oberen Bereich des Behälters erforderlich. Die Leitwand dagegen ist oben und unten offen und gestattet damit die Schlaufenströmung im Reaktionsraum. Die Leitwand kann höhenveränderlich angeordnet sein.

Es ist möglich, einen gemeinsamen Einlaßstutzen für die Suspension und das Flockungshilfsmittel vorzusehen, der die Wandung des Behälters und die Siebwandung durchsetzt und innerhalb der Siebwandung endet. Andererseits können die Suspension durch einen ersten Einlaßstutzen und das Flockungshilfsmittel auch durch einen zweiten Einlaßstutzen eingebracht werden. Die Einlaßstutzen enden in allen Fällen im Reaktionsraum und durchsetzen den Filtratraum, wenn dieser den Reaktionsraum umgibt. Für die umgekehrte Anordnung gilt Entsprechendes.

Der Einlaßstutzen kann auch die Leitwand durchsetzen und zur Erzeugung einer aufwärtsgerichteten Wendelströmung in dem von der Leitwand umschlossenen Teil des Reaktionsraumes enden. Die Leitwand ist zylindrisch ausgebildet, und die Strömungsenergie im Elnlaßstutzen wird dazu ausgenutzt, um eine aufwärtsgerichtete Wendelströmung in dem von der Leitwand umschlossenen Teil des Reaktionsraumes aufzuzwingen, so daß andererseits die Schlaufenströmung, die ebenfalls wendelförmig aufgeprägt erfolgen kann, in dem Teil des Reaktionsraumes zwischen Leitwand und Siebwandung nach abwärts verläuft. Auf jeden Fall ist der oder die Einlaßstutzen von dem Auslaßstutzen zum Abzug des Filtrats durch die Siebwandung getrennt, so daß eine Kurzschlußströmung für das Flockungshilfsmittel mit Sicherheit vermieden wird.

Eine andere Ausführungsform sieht vor, daß innerhalb des von der Leitwand umschlossenen Teils des Reaktionsraumes ein Rührwerk angeordnet ist, welches eine Aufwärtsströmung auf die Suspension ausübt, während außerhalb der Leitwand wiederum die zugehörige Abwärtsströmung stattfindet. Durch die ausgeübten Kräfte stellt sich auch hier eine wendelförmige Strömung ein, die die Ablagerung der Feststoffe an der Innenwandung der Siebwandung begünstigt. Dies geschieht alles in schonender Weise und ohne die pelletierten Flocken wiederum aufzulösen und zu zerstören.

Der Einlaßstutzen kann mit einer tangential gerichteten Krümmung enden, um die Wendelströmung aufzuprägen.

Die Schlitze in der Siebwandung können quer zu ihrer Längserstreckung eine Breite von 0,25 mm aufweisen. Diese Größenordnung hat sich für die Behandlung von Abwässern als besonders günstig erwiesen.

Die Erfindung wird anhand bevorzugter Ausführungsformen der Vorrichtung weiter erläutert und beschrieben. Es zeigen:
- Figur 1: eine schematisierte Darstellung eines Vertikalschnittes durch eine erste Ausführungsform der Vorrichtung gemäß der Schnittangabe I-I in Figur 2,
- Figur 2: eine Draufsicht auf die Vorrichtung gemäß Figur 1,
- Figur 3: eine schematisierte Darstellung eines Vertikalschnittes durch eine zweite Ausführungsform der Vorrichtung gemäß der Schnittangabe III-III in Figur 4 und
- Figur 4: eine Draufsicht auf die Vorrichtung gemäß Figur 3.

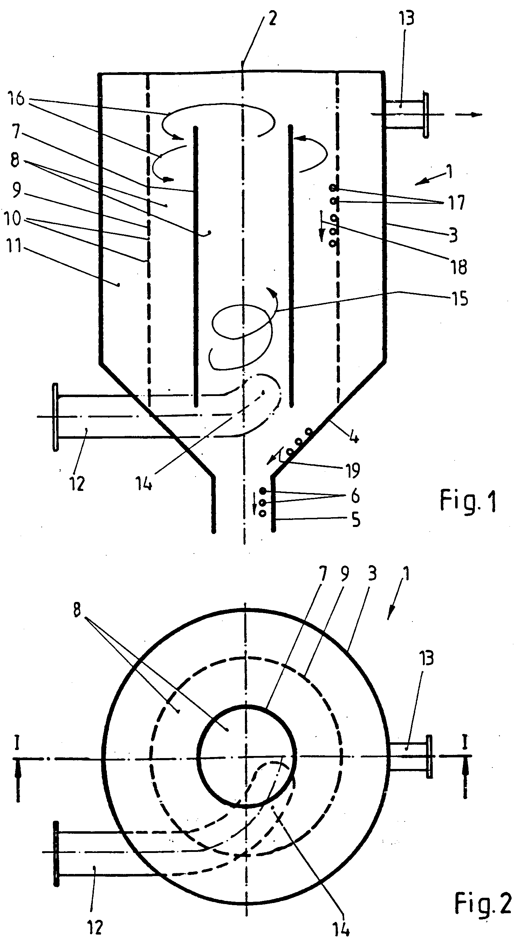

In Figur 1 sind die für die Erfindung wesentlichen Teile der Vorrichtung dargestellt. Ein Behälter 1 ist im wesentlichen rotationssymmetrisch zu einer vertikalen Achse 2 ausgebildet. Er besitzt eine Wandung 3, die sich über den oberen Bereich erstreckt und zylindrisch ausgebildet ist. Nach unten schließt sich ein trichterförmiger Wandungsbereich 4 an, der in einen Auslaßstutzen 5 für pelletierte Flocken 6 übergeht.

Konzentrisch zur Achse 2 ist eine Leitwand 7 vorgesehen, die als zylindrisches Wandungsstück in einem Reaktionsraum 8 oben und unten offen endet. Zwischen der Leitwand 7 und der Wandung 3 des Behälters 1 ist eine Siebwandung 9 angeordnet, die im Wesen zylindrische Gestalt besitzt und in der Durchbrechungen oder Schlitze 10 vorgesehen sind. Die Siebwandung 9 teilt den Innenraum des Behälters 1 in den Reaktionsraum 8 einerseits und einen Filtratraum 11 auf. In den Reaktionsraum 8 führt ein Einlaßstutzen 12, der hier als gemeinsamer Einlaßstutzen für die Suspension und das Flockungshilfsmittel dient. An den Filtratraum 11 schließt ein Auslaßstutzen 13 an, der dem Abzug des Filtrats dient. Der Einlaßstutzen 12 endet bei der Ausführungsform der Vorrichtung gemäß den Figuren 1 und 2 innerhalb des von der Leitwand 7 umschlossenen Teils des Reaktionsraumes 8 und besitzt an seinem freien Ende eine tangential und leicht nach aufwärts gerichtete Krümmung 14. Hierdurch wird der Suspension eine Wendelströmung 15 aufgezwungen, die nach aufwärts gerichtet ist und ein Bestandteil einer um die Leitwand 7 herumgerichteten Schlaufenströmung ist. Die Suspension bewegt sich im Zwischenraum zwischen Leitwand 7 und Siebwandung 9 ebenfalls wendelförmig, jedoch nach unten, also in Schwerkraftrichtung, was durch Pfeile 16 angedeutet ist. Damit haben das Flockungshilfsmittel und die Feststoffe in der Suspension zunächst einmal ausreichend Gelegenheit, miteinander zu reagieren. Die Reaktion ist jedoch nicht nur auf den bewegten Teil der Strömung beschränkt. An der Innenseite der Siebwandung 9 wird sich eine Art Filterschicht aufbauen, die aus abgeschiedenen Feststoffen und zumindest teilweise aus noch nicht vollständig ausreagiertem Flockungshilfsmittel besteht. Diese Kontaktschicht als Zwischenlagerschicht wird bis zu einer gewissen Schichtdicke aufwachsen, und es werden sich dort einzelne pelletierte Flocken 17 aus der Filterschicht lösen und gemäß Pfeil 18 im Bereich niedriger Geschwindigkeiten infolge Schwerkrafteinwirkung nach unten sinken. Diese Flocken 17 gelangen dann in den trichterförmigen Wandungsbereich 4 und treten gemäß Pfeil 19 in den Auslaßstutzen 5 über. Von dort werden sie abgezogen. Die Schlaufenströmung um die Leitwand 7 herum stellt eine weitgehend geschlossene Ringströmung dar, durch welche die Feststoffe in der Suspension und das Flockungshilfsmittel auch mehrmals hindurchgeführt werden kann, bevor sich die Feststoff an dem Bett an der Innenwandung der Siebwandung 9 ablagern. Durch die Schitze 10 tritt das Filtrat unter sehr geringer Strömungsgeschwindigkeit in den Filtratraum 11 über und wird über den Auslaßstutzen 13 abgeführt. Diese Strömungsrichtung begünstigt die Abscheidewirkung der Filterschicht an der Siebwandung 9 und damit die Agglomeration der Feststoffe zu den pelletierten Flocken 17.

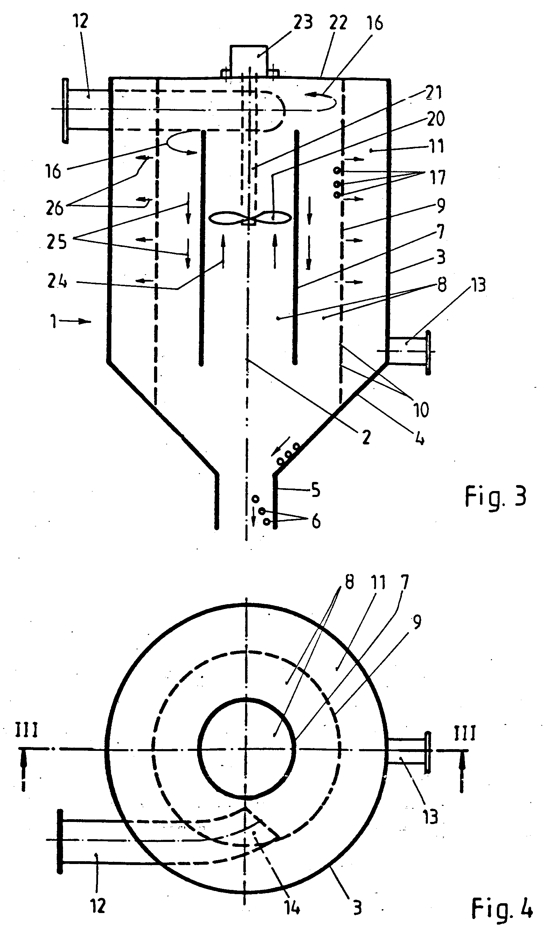

Bei der Ausführungsform gemäß den Figuren 3 und 4 ist der Einlaßstutzen 12 im oberen Bereich der Wandung 3, also oberhalb der Leitwand 7 im Reaktionsraum 8 endend vorgesehen. Auch hierbei kann das freie Ende des Einlaßstutzens 12 tangential ausgerichtet sein, um eine Wendelströmung aufzuprägen. In dem von der Leitwand 7 umschlossenen Teil des Reaktionsraumes 8 ist ein Rührwerk 20 angeordnet, welches eine Welle 21 und einen auf den Deckel 22 des Behälters 1 aufgesetzten Motor 23 aufweist. Es versteht sich, daß das Rührwerk 20 sehr langsam angetrieben ist, um eine schonende gerichtete Strömung zu erzeugen und eine Zerteilungswirkung auf gebildete Flocken zu vermeiden. Der Auslaßstutzen 13 für das Filtrat ist hier im Übergangsbereich zwischen der Wandung 3 und dem trichterförmigen Wandungsbereich 4 vorgesehen. Auch hierbei bildet sich eine Schlaufenströmung aus, die im Inneren der Leitwand 7 gemäß den Pfeilen 24 nach aufwärts gerichtet ist, während sie in dem Teil des Reaktionsraumes 8 zwischen Leitwand 7 und Siebwandung 9 gemäß den Pfeilen 25 nach abwärts gerichtet ist. Auch hierbei lagern sich die Flocken in einer Kontaktschicht an der Innenseite der Siebwandung 9 ab. Das Durchströmen des Filtrats durch die Siebwandung mit mäßiger Geschwindigkeit entsprechend den Pfeilen 26 begünstigt diese Ablagerung. Auch hier wird diese Schicht zu einer gewissen Schichtdicke aufwachsen, wobei sich pelletierte Flocken 17 aus dieser Schicht unter Schwerkrafteinfluß lösen und nach abwärts in den Auslaßstutzen 5 gelangen, von wo sie abgezogen werden.

### BEZUGSZEICHENLISTE

- 1: - Behälter
- 2: - Achse
- 3: - Wandung
- 4: - Wandungsbereich
- 5: - Auslaßstutzen
- 6: - Flocken
- 7: - Leitwand
- 8: - Reaktionsraum
- 9: - Siebwandung
- 10: - Schlitz
- 11: - Filtratraum
- 12: - Einlaßstutzen
- 13: - Auslaßstutzen
- 14: - Krümmung
- 15: - Wendelströmung
- 16: - Pfeil
- 17: - Flocken
- 18: - Pfeil
- 19: - Pfeil
- 20: - Rührwerk
- 21: - Welle
- 22: - Deckel
- 23: - Motor
- 24: - Pfeil
- 25: - Pfeil
- 26: - Pfeil

## Patentansprüche

1. Vorrichtung zur Flockung von Feststoffen aus Suspensionen, insbesondere aus Schlämmen oder Abwässern, unter Verwendung von Flockungshilfsmitteln, mit einem Behälter (1) mit vertikaler Achse (2) und rotationsymmetrischer Wandung (3), der Einlässe für die Suspension und das Flockungshilfsmittel und Auslässe für das Filtrat und die pelletierten Flocken (6) aufweist und in dem eine rotationssymmetrische Leitwand (7) zur Ausbildung einer Schlaufenströmung vorgesehen ist, dadurch gekennzeichnet, daß zwischen der Leitwand (7) und der Wandung (3) des Behälters (1) eine Siebwandung (9) vorgesehen ist, die rotationssymmetrisch zur Achse (2) des Behälters (1) angeordnet ist und einen Filtratraum (11) abteilt.

2. Vorrichtung nach Anspruch 1, dadurch gekennzeichnet, daß die Siebwandung (9) als Schlitzwandung mit vertikal ausgerichteten Schlitzen (10) vorgesehen ist.

3. Vorrichtung nach Anspruch 1 oder 2, dadurch gekennzeichnet, daß die Wandung (3) des Behälters (1) im unteren Bereich trichterförmig ausgebildet ist und die Siebwandung (9) an den trichterförmigen Wandungsbereich (4) anschließt.

4. Vorrichtung nach einem der Ansprüche 1 bis 3, dadurch gekennzeichnet, daß ein gemeinsamer Einlaßstutzen (12) für die Suspension und das Flockungshilfsmittel vorgesehen ist, der die Wandung (3) des Behälters (1) und die Siebwandung (9) durchsetzt und innerhalb der Siebwandung endet.

5. Vorrichtung nach Anspruch 4, dadurch gekennzeichnet, daß der Einlaßstutzen (12) die Leitwand (7) durchsetzt und zur Erzeugung einer aufwärts gerichteten Wendelströmung (15) in dem von der Leitwand (7) umschlossenen Teil des Reaktionsraumes (8) endet.

6. Vorrichtung nach Anspruch 4, dadurch gekennzeichnet, daß in dem von der Leitwand (7) umschlossenen Teil des Reaktionsraumes (8) ein Rührwerk (20) angeordnet ist.

7. Vorrichtung nach Anspruch 4, dadurch gekennzeichnet, daß der Einlaßstutsen (12) mit einer tangential gerichteten Krümmung (14) endet.

8. Vorrichtung nach Anspruch 2, dadurch gekennzeichnet, daß die Schlitze (10) quer zu ihrer Längserstreckung eine Breite von 0,25 mm aufweisen.
